# EUROPÄISCHE PATENTSCHRIFT

(11) **EP 2 063 157 B1**
(45) Veröffentlichungstag und Bekanntmachung des Hinweises auf die Patenterteilung: **16.01.2013**
(21) Anmeldenummer: 08019677.7
(22) Anmeldetag: 11.11.2008
(51) Int. Cl.: F16J 15/38

(54) **Gleitringdichtungsanordnung**
Mechanical seal arrangement
Arrangement de bague d'étanchéité glissante

(30) Priorität: 23.11.2007 DE 202007016407 U
(43) Veröffentlichungstag der Anmeldung: 27.05.2009
(73) Patentinhaber: EagleBurgmann Germany GmbH & Co. KG, 82515 Wolfratshausen (DE)
(72) Erfinder: Lederer, Günther, 82538 Geretsried (DE); Schrüfer, Andreas, 82515 Wolfratshausen (DE); Dröscher, Peter, 82538 Geretsried-Gelting (DE); Philippi, Petia, 82515 Wolfratshausen (DE); Laxander, Armin, 82067 Ebenhausen (DE)
(74) Vertreter: Schaeberle, Steffen

(56) Entgegenhaltungen:
- EP-A- 1 253 359
- GB-A- 2 045 875
- US-A- 6 076 830
- US-B1- 6 293 555

## Beschreibung

Die Erfindung betrifft eine Gleitringdichtungsanordnung und insbesondere eine solche mit wenigstens einem Paar zusammenwirkender Gleitringe, von denen einer axial beweglich und mit einer Vorspannkraft gegen den betreffenden anderen Gleitring axial vorgespannt ist, und mit einer Nebendichtungsanordnung zur Abdichtung des axial beweglichen Gleitringes gegenüber wenigstens einer die Bewegung des Gleitringes und eines Vorspannkraftübertragungsringes führenden Führungsumfangsfläche eines Führungsbauteiles. Eine derartige Gleitringdichtungsanordnung ist z.B. aus der US 3 479 039 A bekannt.

Bei der bekannten Gleitringdichtungsanordnung erfolgt die Abdichtung des Gleitringes gegenüber einem Gehäuse durch O-Ringe, die in Nuten im Gleitring aufgenommen sind. Bekannt ist es auch (WO 2006/040865), einen oder mehrere O-Ringe zwischen einem Gehäuse und dem Umfang des Gleitringes in axialendig offenen Aussparungen im Gleitring bzw. Gehäuse vorzusehen. In jedem Fall beruht die Dichtwirkung der O-Ringe auf einem vorzusehenden Übermaß in Bezug auf den Spalt, den es abzudichten gilt, so dass eine axiale Bewegung des Gleitringes gegen hohe Reibwiderstände vonstatten geht und dadurch die für die Funktion des Gleitringes wichtige Beweglichkeit entsprechend eingeschränkt ist.

Die US 6,076,830 B offenbart eine Gleitringdichtungsanordnung gemäß dem Oberbegriff des Anspruchs 1.

Ferner ist aus der GB 2 045 875 A eine Gleitringdichtung bekannt, welche ein Paar von O-Ringen und einen Kraftübertragungsring zeigt, welche an einer rückwärtigen Seite eines Gleitrings abdichten. Eine Feder übt dabei eine axiale Kraft auf den Kraftübertragungsring aus, um eine Abdichtung an Führungsumfangsflächen der O-Ringe zu ermöglichen.

Der Erfindung liegt die Aufgabe zugrunde, eine gattungsgemäße Gleitringdichtungsanordnung zu schaffen, bei der die axiale Beweglichkeit des betreffenden Gleitringes durch die Nebendichtungsanordnung nicht oder nur in wesentlich geringerem Masse beeinträchtigt wird und gleichzeitig die Montage vereinfacht ist.

Diese Aufgabe wird durch die Merkmale des Anspruchs 1 gelöst.

Gemäß der Erfindung ist die Nebendichtungsanordnung an einem Kraftübertragungsring vorgesehen, während der axial bewegliche Gleitring selbst frei von Nuten oder dgl. zur Aufnahme von Nebendichtungselementen, wie O-Ringen, ist. Die axiale Beweglichkeit des Gleitringes wird daher durch solche Nebendichtungselemente nicht beeinträchtigt. Am Kraftübertragungsring sind die Nebendichtungselemente, bei denen es sich vorzugsweise um O-Ringe handelt, in bestimmter Weise gehalten und angeordnet dergestalt, dass eine radiale Dichtwirkung in nennenswertem Umfang erst zustande kommt, wenn die Nebendichtungselemente unter eine axiale Kraft gesetzt werden, die eine radiale Ausdehnung der Nebendichtungselemente bewirkt. Die Nebendichtungselemente brauchen daher kein Übermaß in Bezug auf den Spalt, den sie abdichten, aufweisen, so dass der Kraftübertragungsring zusammen mit den Nebendichtungselementen ungehindert durch Reibwiderstände in Bezug auf die abzudichtenden Oberfläche axial bewegt werden kann. Somit ist ohne Einwirkung einer axialen Vorspannkraft auf die Nebendichtungselemente kein Eingriff mit Führungsumfangflächen, welche den Kraftübertragungsring führen, gegeben. Dadurch stehen die Nebendichtungselemente ohne Vorspannkraft in radialer Richtung nicht oder nur minimal über den Kraftübertragungsring vor. Dies erleichtert wesentlich die Montage der Gleitringdichtungsanordnung und gewährleistet ferner, dass die radiale Abdichtung gezielt auf die Erfordernisse der jeweiligen Gleitringdichtungsanordnung abgestimmt werden kann und dennoch handelsübliche Nebendichtungselemente verwendet werden können. Ein weiteres Merkmal der Erfindung ist, dass die Nebendichtungselemente um ein geringes Maß axial vom Kraftübertragungsring vorstehen und hierdurch eine Anlage zwischen dem Kraftübertragungsring und dem Gleitring geschaffen wird, die nicht starr, sondern elastisch nachgiebig ist. Dadurch kann der Gleitring gegenüber dem Kraftübertragungsring in gewissen Grenzen eine Lageänderung vornehmen, was selbstkompensierende Wirkung auf die Konfiguration des Dichtspaltes hat, so dass dieser die gewünschte Konfiguration beibehält. Die Vorspannkraft wirkt demzufolge erfindungsgemäß über den Kraftübertragungsring und die Nebendichtungselemente auf den Gleitring und wird dabei durch die Nebendichtungselemente praktisch nicht geschwächt.

Gemäß einer Weiterbildung der Erfindung kann ferner vorgesehen sein, dass der Kraftübertragungsring von einer axialen Durchlassöffnung durchsetzt ist und andererseits eine Strömungspassage im Gleitring vorgesehen ist, die an einer dichtspaltfördernden Aussparung oder Ausnehmung in der Gleitringfläche ausmündet. Es kann dadurch über den Kraftübertragungsring ein Druckmedium zur dichtspaltfördernden Ausnehmung geführt werden, um zwischen den zusammenwirkenden Gleitringen der Gleitringpaarung vorzeitig eine Dichtspaltbildung zu bewirken. Dabei verbleibt der Kraftübertragungsring in einem gegenüber dem Druckmedium druckentlasteten Zustand. Um eine Montage ohne Ausrichtungsprobleme des Kraftübertragungsrings mit axialer Durchlassöffnung und des Gleitrings mit Strömungspassage zu ermöglichen, sind die Nebendichtungselemente derart ausgebildet, dass sie auch bei Vorliegen einer axialen Vorspannkraft auf den Kraftübertragungsring einen vorbestimmten axialen Abstand zwischen dem Kraftübertragungsring und dem Gleitring sicherstellen. Hierdurch wird ein in Umfangsrichtung verlaufender Spalt aufrechterhalten, so dass eine Verbindung zwischen der axialen Durchlassöffnung des Kraftübertragungsrings und der Strömungspassage im Gleitring über diesen Spalt im montierten Zustand sichergestellt ist. Hierdurch ist es auch möglich, dass die axiale Durchlassöffnung im Kraftübertragungsring und die Strömungspassage im Gleitring auf unterschiedlichen Durchmessern vorgesehen werden. Bezüglich anderer Weiterbildungen wird auf die Ansprüche verwiesen.

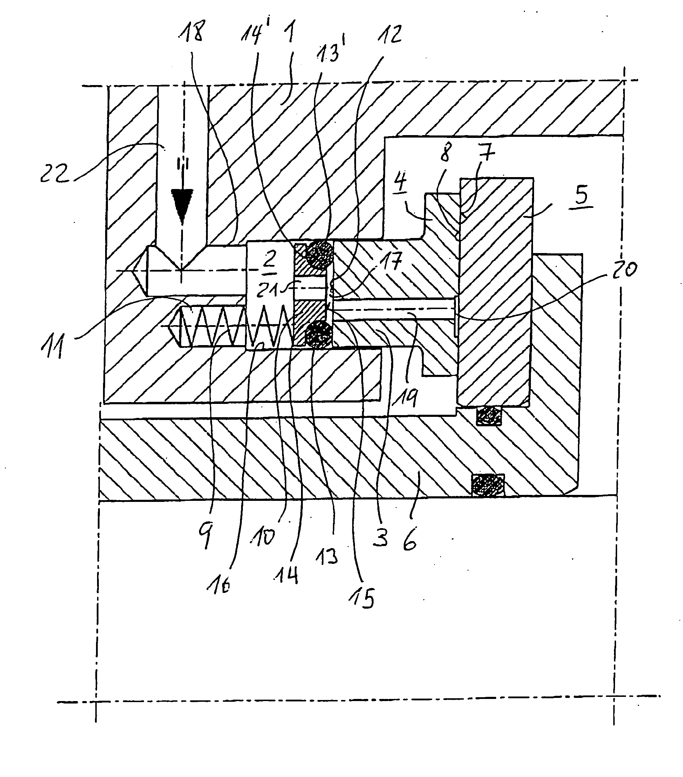

Die Erfindung wird nachfolgend anhand der Zeichnung, die in längsgeschnittener Teilansicht eine bevorzugte Ausführungsform einer erfindungsgemäßen Gleitringdichtungsanordnung zeigt, näher erläutert.

In der Zeichnung ist mit dem Bezugszeichen 1 ein stationäres Bauteil, insbesondere ein Gehäuse der Gleitringdichtungsanordnung bezeichnet und mit dem Bezugszeichen 2 ein axial in das Gehäuse eingebrachter Führungsringraum oder eine ringförmige Ausnehmung mit einem endseitigen offenen Ende, in das ein axialer Ansatzbereich 3 eines drehfesten, jedoch axial beweglichen Gleitringes 4 hineinragt, so dass der Gleitring 4 im Führungsringraum 2 gehalten und axial geführt ist.

Der drehfeste Gleitring 4 wirkt mit einem Gleit- oder Gegenring 5 zusammen, der zur gemeinsamen Drehung auf einer Buchse 6 montiert ist, die auf einem rotierenden Bauteil (Welle) zur gemeinsamen Drehung damit aufgesetzt und montiert werden kann. Bei einer Drehung des rotierenden Bauteils wird daher der Gleitring 5 zu einer ebensolchen Drehung veranlasst, während der Gleitring 4 durch geeignete nicht gezeigte drehsichernde Mittel drehfest in Bezug auf das Gehäuse 1 gehalten ist. Derartige Mittel sind dem Fachmann bekannt und brauchen nicht näher erläutert zu werden.

Die Gleitringe 4, 5 haben gegenüberliegende Gleit- oder Dichtflächen 7 bzw. 8, zwischen denen bei Betrieb ein Dichtspalt gebildet wird, um die Umgebung an einem Umfang gegenüber der Umgebung am anderen Umfang der Gleitringpaarung abzudichten. Bei Stillstand der Gleitringdichtungsanordnung werden die Gleitflächen 7, 8 unter einer Vorspannkraft in dichtendem Eingriff miteinander gehalten.

Dazu ist eine Vorspanneinrichtung 9, bei der es sich um eine oder mehrere umfänglich des Führungsringraums 2 verteilt angeordnete Vorspannfedern handeln kann, vorgesehen, um auf den Gleitring 4 besagte Vorspannkraft auszuüben. Die Vorspannkraft der Vorspanneinrichtung 9 wirkt auf den Gleitring 4 nicht unmittelbar, sondern über einen Kraftübertragungsring 10, der im Führungsringraum 2 axial beweglich angeordnet ist. Die Vorspanneinrichtung 9 ist mit einem Ende am Kraftübertragungsring 10 und am anderen Ende am Gehäuse 2, vorzugsweise am Boden von im Gehäuse 1 vorgesehener Sacklochbohrungen 11 abgestützt. Unter der Wirkung der Vorspannkraft erfährt der Kraftübertragungsring 10 eine axiale Bewegung im Führungsringraum 2 in Richtung auf die benachbarte Stirnseite 12 des Gleitringes 4, so dass auf diesen die Vorspannkraft übertragen wird.

Erfindungsgemäß weist der Kraftübertragungsring 10 ein Paar Dichtungselemente 13, 13' aus einem elastischen Material wie einem Elastomermaterial auf, die dazu dienen, den Gleitring 4 gegenüber dem Gehäuse 1 abzudichten. Vorzugsweise handelt es sich bei den Dichtungselementen um handelsüblich erhältliche O-Ringe, die in umfänglich sich erstreckenden Aussparungen 14, 14' mit einem an die Querschnittkonfiguration der Dichtungselemente 13, 13' angepassten, z.B. teilkreisförmigem Querschnitt im Eckbereich zwischen dem äußeren bzw. inneren Umfang und einer dem Gleitring 4 zugewandten Endfläche 15 des Kraftübertragungsringes 10 so angeordnet sind, dass der Querschnitt jedes Dichtungselementes 13, 13' die Endfläche 15 um ein geeignetes geringes Maß von z.B. ca. 0,5 bis 1 mm bei einer Querschnittsabmessung von 3,5 bis 7,0 mm axial überragt. Vorzugsweise überragen die Dichtungselemente 13, 13' ohne Vorliegen einer Vorspannkraft auch den äußeren bzw. inneren Umfang des Kraftübertragungsringes 10 um ein geringes Maß. Dieses ohne Vorspannkraft vorliegende geringe Übermaß der Dichtungselemente 13, 13' in radialer Richtung ist kleiner als das ohne Vorspannung vorliegende Übermaß in axialer Richtung und liegt vorzugsweise zwischen 0 und 0,2mm. Besonders bevorzugt weisen die Dichtungselemente 13, 13' ohne Vorspannung kein Übermaß in radialer Richtung über den Kraftübertragungsring 10 auf.

Vorzugsweise haben die Dichtungselementes 13, 13' gleiche Querschnittsabmessungen und liegen ihre Querschnittsmittelpunkte auf einer gemeinsamen radialen Ebene.

Die Dichtungselemente 13, 13' können mit benachbarten inneren bzw. äußeren Umfangsflächen 16, 18 des Führungsringraumes 2 in Eingriff treten, wenn die Dichtungselemente 13, 13' infolge einer darauf ausgeübten Axialkraft eine radiale Ausdehnung erfahren. Ohne diese Axialkraft liegt dagegen keine oder eine nur vernachlässigbar geringe Eingriffnahme der Dichtungselemente 13, 13' mit den Umfangsflächen 16, 18 vor, so dass unter diesen Umständen die axiale Beweglichkeit des Kraftübertragungsringes 10 nicht beeinträchtigt ist.

Wenn der Kraftübertragungsring 10 mit den Dichtungselementen 13, 13' unter der von der Vorspanneinrichtung 9 ausgeübten Vorspannkraft gegen die benachbarte Stirnseite 12 des Gleitringes 4 gedrückt wird, bewirkt dies die Bildung eines Spaltraumes 17 zwischen dem Kraftübertragungsring 10 und der Stirnseite 12 des Gleitringes 4, der außen- und innenumfänglich durch die Dichtungselemente 13, 13' begrenzt und abgedichtet ist. Ferner bewirkt die Axialkraft auf die Dichtungselemente 13, 13', dass diese eine radiale Ausdehnung erfahren und dadurch in dichtendem Eingriff mit den Umfangsflächen 16, 18 des Führungsringraumes 12 treten, um den Gleitring 4 gegenüber dem Gehäuse 1 abzudichten.

Die Erfindung ermöglicht damit das Einsetzen des Kraftübertragungsringes 10 in den Führungsringraum 12 ohne Reibwiderstand seitens der Dichtungselemente 13, 13'. Ferner hat die axiale Eingriffnahme zwischen dem Kraftübertragungsring 10 und dem Gleitring 4 über die Dichtungselemente 13, 13' zur Folge, dass die Eingriffnahme nicht starr, sondern nachgiebig ist und daher Lageabweichungen zwischen dem Gleitring 4 und Kraftübertragungsring 10 kompensiert werden können.

Wie weiter gezeigt ist, ist der drehfeste Gleitring 4 axial von einer Strömungspassage 19 durchsetzt, die einerends an der Stirnfläche 12 ausmündet und anderenends in eine ringförmige Ausnehmung 20 mit geeigneter geringer Tiefe, die in der Gleitfläche 7 des Gleitringes 4 eingebracht ist. Wenn erwünscht, können auch mehrere derartige Strömungspassagen 19 vorgesehen sein. Über jede Strömungspassage 19 kann in die ringförmige Ausnehmung 20 ein Druckmedium, z.B. ein Gas oder eine Flüssigkeit eingeführt werden, um die Dichtspaltbildung zwischen den Gleitflächen 7, 8 zu bewirken bzw. fördern. Der Kraftübertragungsring 10 ist von einer Passage 21 durchsetzt, die einerends innerhalb des von den Dichtungselementen 13, 13' umgrenzten Bereiches der Endfläche 15 ausmündet und anderenends in den Führungsringraum 2, in den anderseits eine im Gehäuse 1 vorgesehene Strömungspassage 22 einmündet. Wenn erwünscht, können auch mehrere derartige Strömungspassagen 22 vorgesehen sein. Ein in die oder jede Strömungspassage 22 , wie durch den Pfeil angedeutet, eingeführtes Strömungsmedium kann daher über den Führungsringraum 2, die Bohrung 21 im Kraftübertragungsring 10, den Spaltraum 17 und die Strömungspassage 19 zur Ausnehmung 20 in der Gleitfläche 7 des Gleitringes 4 gelangen. Hierbei weisen die Dichtungselemente 13, 13' auch bei Vorliegen der Vorspannkraft einen in axialer Richtung vorstehenden Bereich auf, um den ringförmigen Spaltraum 17 zwischen dem Kraftübertragungsring 10 und dem Gleitring 4 aufrechtzuerhalten. Dies ermöglicht es, dass bei einer Montage der Gleitringdichtungsanordnung auf eine Ausrichtung des Kraftübertragungsrings 10 und des Gleitrings 4 verzichtet werden kann, da die Verbindung zwischen der Bohrung 21 im Kraftübertragungsring 10 und der Strömungspassage 19 im Gleitring 4 über den Spaltraum 17 auch bei Vorliegen einer Vorspannung aufrechterhalten wird. Ferner ist es dadurch möglich, dass die Bohrung 21 und die Strömungspassage 19 auf unterschiedlichen Durchmessern angeordnet sind. Dies führt zu einem besonders kompakten Aufbau, da die Bohrung 21 und die Strömungspassage jeweils unabhängig voneinander im Kraftübertragungsring 10 und im Gleitring 4 angeordnet werden können. Wie aus der Figur ersichtlich ist, ist dabei ein Durchmesser, auf welchem die Bohrung 21 angeordnet ist, größer als ein Durchmesser, auf welchem die Strömungspassage 19 angeordnet ist. Um eine ausreichende Auflagefläche für die Federelemente der Vorspanneinrichtung 9 bereitzustellen, ist die Bohrung 21 im Kraftübertragungsring 10 asymmetrisch zu einem mittleren Durchmesser angeordnet, wobei die Bohrung 21, wie in der Figur gezeigt, näher an dem Dichtungselement 13' liegt.

Bei der voraus beschriebenen bevorzugten Ausführungsform der Erfindung weist der Kraftübertragungsring 10 ein Paar Dichtungselemente 13, 13' auf, die in der erfindungsgemäßen Weise nahe dem inneren bzw. äußeren Umfang des Kraftübertragungsringes 10 angeordnet sind. Wenn erwünscht, könnte auch nur ein derartiges Dichtungselement am Kraftübertragungsring in der erfindungsgemäßen Weise angeordnet sein, so dass eine Abdichtung gegenüber nur einer Führungsumfangsfläche geschaffen würde, während eine Abdichtung gegenüber der anderen Führungsumfangsfläche auf andere Weise erfolgen könnte, sofern nicht auf eine derartige Abdichtung gänzlich verzichtet würde. Es versteht sich ferner, dass auf die beschriebenen Maßnahmen zur Zufuhr eines Strömungsmediums zu der in der Gleitfläche des drehfesten Gleitringes vorgesehenen Ausnehmung verzichtet werden kann, insbesondere wenn die Dichtspaltbildung durch andere geeignete Maßnahmen, z.B. förderwirksame Ausnehmungen in der Dichtfläche, erhalten bzw. gefördert würde, wie diese z.B. in Burgmann, Gas Seals, Selbstverlag 1997, Seite 17 näher beschrieben sind.

## Patentansprüche

1. Gleitringdichtungsanordnung mit wenigstens einem Paar zusammenwirkender Gleitringe (4,5), von denen einer zur gemeinsamen Drehung mit einem rotierenden Bauteil und der andere drehfest an einem stationären Bauteil vorgesehen ist, wobei einer der Gleitringe (4) axial beweglich und mit einer Vorspannkraft gegen den betreffenden anderen Gleitring (5) axia) vorgespannt ist, welche Vorspannkraft über einen Kraftübertragungsring (10) auf den betreffenden Gleitring (4) übertragbar ist, um einander zuweisende Gleitflächen (7,8) der Gleitringe (4,5), zwischen denen bei Betrieb ein Dichtspalt gebildet ist, in einen dichtenden Eingriff miteinander vorzuspannen, wobei ein Paar koaxiale Führungsumfangsflächen (16,18) vorgesehen sind, die zwischen sich einen Führungsringraum (2) begrenzen, in dem der Kraftübertragungsring (10) und wenigstens ein axialer Bereich des Gleitringes (4) aufgenommen sind und mit einer am Kraftübertragungsring (10) vorgesehenen Nebendichtungsanordnung zur Abdichtung des axial beweglichen Gleitringes (4) genüber wenigstens der Bewegung des Gleitringes (4) und des Kraftübertragungsringes (10) führenden Führungsumfangsflächer (16,18) eines Führungsbauteiles (1), wobei die Nebendichtungsanordnung ein Paar Dichtungselemente (13, 13') umfasst, von denen eines nahe dem inneren Umfang und das andere nahe dem äußeren Umfang des Kraftübertragungsringes (10) der dem Gleitring (4) gewandten Endfläche (15) gehalten ist, wobei das eine Dichtungselement (13) mit einer der Führungsumfangsflächen (16) und das andere (13') mit der anderen Führungsumfangsfläche (18) in einen dichtenden Eingriff bringbar ist, während die Dichtungselemente (13, 13') gleichzeitig an der dem Gleitring zugewandten Endfläche (15) einen axialen Spaltraumbereich (17) umfänglich begrenzen wobei die Nebendichtungsanordnung aus einem elastischen Material umfasst, **dadurch gekennzeichnet, dass** das wenigstens ein ringförmiges Dichtungselement (13,13') am Kraftübertragungsring (10) nahe seinem Umfang und seiner dem Gleitring (4) zugewandten Endfläche (15) den Kraftübertragungsring (10) axial überragend gehalten ist und gleichzeitig in dichtenden Eingriff mit dem Gieitring (4) und der Führungsumfangsfläche (16,18) bringbar ist und mit der Vorspannkraft axial beaufschlagbar ist, wobei das Dichtungselement (13, 13') am Kraftübertragungsring (10) so gehalten ist, dass es unter der Wirkung der axialen Vorspannkraft durch radiale Ausdehnung in einen dichtenden Eingriff mit der Führungsumfangsfläche (16,18) bringbar ist und ohne Einwirken der Vorspannkraft eine solche Eingriffnahme im wesentlichen verhindert ist, wobei der axial bewegliche Gleitring frei von Nuten oder dergleichen zur Aufnahme von Nebendichtungselementen ist

2. Gleitringdichtungsanordnung nach Anspruch 1, **dadurch gekennzeichnet, dass** die Dichtungselemente (13, 13') im wesentlichen gleiche Querschnittsabmessungen haben, wobei die Querschnittsmittelpunkte der Dichtungselemente auf einer im wesentlichen gemeinsamen radialen Ebene angeordnet sind.

3. Gleitringdichtungsanordnung nach Anspruch 1 oder 2, **dadurch gekennzeichnet, dass** der Kraftübertragungsring (10) von einer axialen Durchlassöffnung (21) durchsetzt ist, wobei die Durchlassöffnung einerends innerhalb des Spaltraumbereiches (17) ausmündet.

4. Gleitringdichtungsanordnung nach Anspruch 3, **gekennzeichnet durch** eine Strömungspassage (19) im Gleitring (4), die einerends an dessen dem Kraftübertragungsring (10) zugewandten Stirnfläche (12) in Ausrichtung zum axialen Spaltraumbereich (17) und anderends an dessen Gleitfläche (7) ausmündet, um ein eine Dichtspaltbildung förderndes Strömungsmedium zwischen die zusammenwirkenden Gleitflächen (7,8) zu führen.

5. Gleitringdichtungsanordnung nach einem der vorhergehenden Ansprüche, **dadurch gekennzeichnet, dass** jedes Dichtungselement (13, 13') als O-Ring ausgebildet ist.

6. Gleitringdichtungsanordnung nach einem der vorhergehenden Ansprüche, **dadurch gekennzeichnet, dass** der drehfeste Gleitring (4) axial beweglich ist.

7. Gleitringdichtungsanordnung nach einem der vorhergehenden Ansprüche, **dadurch gekennzeichnet, dass** eine Federvorspanneinrichtung (9) zum Aufbringen der Vorspannkraft vorgesehen ist.

## Claims

1. A mechanical seal assembly comprising at least one pair of co-operating seal rings (4, 5), one of which is provided for common rotation with a rotating component and the other of which is provided rotationally fixed at a stationary component, one of the seal rings (4) being axially movable and axially biased with a biasing force against the respectively other seal ring (5), said biasing force being transmittable through a force transmitting ring (10) to the respective seal ring (4), in order to bias facing sliding surfaces (7, 8) of the seal rings (4, 5), between which a sealing gap is formed during operation, in a mutual sealing engagement, a pair of coaxial guiding peripheries (16, 18) being provided which delimit a guiding ring space (2) between them, in which the force transmitting ring (10) and at least an axial portion of the seal ring (4) is received, and comprising a secondary sealing assembly provided at the force transmitting ring (10) for sealing the axially movable seal ring (4) with respect to at least the circumferential guiding surfaces (16, 18) of a guiding component (1) guiding the movement of the seal ring (4) and the force transmitting ring (10), the secondary sealing assembly comprising a pair of sealing members (13, 13'), one of which is retained near the inner periphery and the other of which is retained near the outer periphery of the force transmitting ring (10) of the end face (15) facing the seal ring (4), the one sealing member (13) being configured to sealingly engage with one of the circumferential guiding surfaces (16) and the other sealing member (13') being configured to sealingly engage with the other circumferential guiding surface (18), while the sealing members (13, 13') simultaneously delimit an axial gap space region (17) circumferentially at the end face (19) facing the seal ring, the secondary sealing assembly including at least one annular sealing member (13, 13') made of an elastic material, **characterized in that** the at least one annular sealing member (13, 13') is retained at the force transmitting ring (10) near its periphery and its end face (15) facing the seal ring (4) such that it axially protrudes beyond the force transmitting ring (10) and is configured to sealingly engage simultaneously with the seal ring (4) and the circumferential guiding surface (16, 18) and is configured to be axially loaded with the biasing force, wherein the sealing member (13, 13') is retained at the force transmitting ring (10) such that it is configured to sealingly engage with the circumferential guiding surface (16, 18) by effect of the axial biasing force through radial expansion and such engagement is substantially prevented if no biasing force is effective, wherein the axially movable seal ring is free of grooves, or the like, for receiving secondary sealing members.

2. The mechanical seal assembly of claim 1, **characterized in that** the sealing members (13, 13') substantially have the same cross-sectional dimensions, wherein the cross-sectional centers of the sealing members are arranged on a substantially common radial plane.

3. The mechanical seal assembly of claim 1 or 2, **characterized in that** the force transmitting ring (10) is interspersed with an axial aperture (21), wherein the aperture at one end opens out within the gap space region (17).

4. The mechanical seal assembly of claim 3, **characterized by** a flow passage (19) in the seal ring (4), which at one end opens out at the face end (12) thereof facing the force transmitting ring (10) in alignment with the axial gap space region (17) and at the other end opens out into the sliding surface (7) thereof, in order to supply a flow medium promoting the sealing gap formation between the co-operating sliding surfaces (7, 8).

5. The mechanical seal assembly of any of the preceding claims, **characterized in that** each sealing member (13, 13') is formed as an O-ring.

6. The mechanical seal assembly of any of the preceding claims, **characterized in that** the rotationally fixed seal ring (4) is axially movable.

7. The mechanical seal assembly of any of the preceding claims, **characterized in that** a spring biasing device (9) for applying the biasing force is provided.

## Revendications

1. Ensemble d'étanchéité à bagues glissantes comportant au moins une paire de bagues glissantes (4, 5) en interaction, dont l'une est prévue pour tourner conjointement avec un composant en rotation et l'autre est prévue de manière solidaire en rotation au niveau d'un composant stationnaire, sachant qu'une (4) des bagues glissantes peut être déplacée axialement et être précontrainte axialement avec une force de précontrainte contre l'autre bague glissante (5) concernée, laquelle force de précontrainte peut être transmise par l'intermédiaire d'une bague de transmission de force (10) sur la bague glissante (4) concernée, afin de précontraindre des surfaces de glissement (7, 8) des bagues glissantes (4, 5), orientées les unes vers les autres de manière à être en prise de manière étanche l'une avec l'autre, une fente étanche étant formée entre les bagues glissantes lors du fonctionnement, sachant qu'une paire de surfaces périphériques de guidage (16, 18) coaxiales sont prévues, lesquelles délimitent un espace annulaire de guidage (2) entre elles, lequel reçoit la bague de transmission de force (10) et au moins une zone axiale de la bague glissante (4), et comportant une ensemble d'étanchéité auxiliaire prévu sur la bague de transmission de force (10) et servant à étanchéifier la bague glissante (4) mobile axialement par rapport au moins aux surfaces périphériques de guidage (16, 18) d'un composant de guidage (1) guidant le déplacement de la bague glissante (4) et de la bague de transmission de force (10), sachant que l'ensemble d'étanchéité auxiliaire comporte une paire d'éléments d'étanchéité (13, 13'), dont un élément d'étanchéité est maintenu à proximité de la périphérie intérieure et l'autre élément d'étanchéité est maintenu à proximité de la périphérie extérieure de la bague de transmission de force (10) de la surface d'extrémité (15) tournée vers la bague glissante (4), sachant que le premier élément d'étanchéité (13) peut être amené en prise de manière étanche avec une des surface périphériques de guidage (16) et l'autre élément d'étanchéité (13') peut être amené en prise de manière étanche avec l'autre surface périphérique de guidage (18), tandis que les éléments d'étanchéité (13, 13') délimitent de manière simultanée sur le pourtour une zone d'espace de séparation (17) axiale au niveau de la surface d'extrémité (15) tournée vers la bague glissante, **caractérisé en ce qu'**au moins un élément d'étanchéité (13, 13') annulaire est maintenu tout en dépassant axialement la bague de transmission de force (10) au niveau de la bague de transmission de force (10) à proximité de sa périphérie et de sa surface d'extrémité (15) tournée vers la bague glissante (4) et peut être de manière simultanée amené en prise de manière étanche avec la bague glissante (4) et la surface périphérique de guidage (16, 18) et peut être soumis axialement à l'action de la force de précontrainte, sachant que l'élément d'étanchéité (13, 13') est maintenu sur la bague de transmission de force (10) de telle manière qu'il peut être amené en prise de manière étanche avec la surface périphérique de guidage (16, 18) sous l'action de la force de précontrainte axiale par dilatation radiale, **en ce qu'**une telle prise est essentiellement empêchée sans l'action de la force de précontrainte, sachant que la bague glissante axialement mobile est exempte de rainures ou similaires servant à recevoir des éléments d'étanchéité auxiliaires.

2. Ensemble d'étanchéité à bagues glissantes selon la revendication 1, **caractérisé en ce que** les sections transversales des éléments d'étanchéité (13, 13') présentent essentiellement des dimensions identiques, sachant que les centres des sections transversales des éléments d'étanchéité sont disposés sur un plan radial essentiellement commun.

3. Ensemble d'étanchéité à bagues glissantes selon la revendication 1 ou 2, **caractérisé en ce que** la bague de transmission de force (10) est traversée par un orifice de passage (21) axial, sachant que l'orifice de passage débouche du côté d'une extrémité à l'intérieur de la zone d'espace de séparation (17).

4. Ensemble d'étanchéité à bagues glissantes selon la revendication 3, **caractérisé par** un passage d'écoulement (19) dans la bague glissante (4), lequel débouche du côté d'une extrémité au niveau de la face frontale (12) de cette dernière tournée vers la bague de transmission de force (10) en direction de la zone d'espace de séparation (17) axiale et du côté de l'autre extrémité au niveau de la face de glissement (7) de ladite bague glissante, afin de guider un fluide d'écoulement exigeant une formation de fente étanche entre les surfaces de glissement (7, 8) en interaction.

5. Ensemble d'étanchéité à bagues glissantes selon l'une quelconque des revendications précédentes, **caractérisé en ce que** chaque élément d'étanchéité (13, 13') est réalisé comme un joint torique.

6. Ensemble d'étanchéité de bagues glissantes selon l'une quelconque des revendications précédentes, **caractérisé en ce que** la bague glissante (4) solidaire en rotation peut être déplacée axialement.

7. Ensemble d'étanchéité à bagues glissantes selon l'une quelconque des revendications précédentes, **caractérisé en ce qu'**un dispositif de précontrainte de rappel (9) est prévu pour appliquer la force de précontrainte.
